# EUROPEAN PATENT SPECIFICATION

(11) **EP 2 253 229 B1**
(45) Date of publication and mention of the grant of the patent: **30.11.2011**
(21) Application number: 09722855.5
(22) Date of filing: 16.03.2009
(51) Int. Cl.: A23L 1/325, A23K 1/10

(54) **METHOD OF PRODUCING FISH PASTE PRODUCT AND ENZYME PREPARATION FOR FISH PASTE PRODUCTS**
VERFAHREN ZUR HERSTELLUNG EINES FISCHPASTENPRODUKTS UND ENZYMPRÄPARAT FÜR FISCHPASTENPRODUKTE
PROCÉDÉ DE PRODUCTION D'UN PRODUIT À BASE DE PÂTE DE POISSON ET PRÉPARATION ENZYMATIQUE POUR DES PRODUITS À BASE DE PÂTE DE POISSON

(30) Priority: 17.03.2008 JP 2008067037
(43) Date of publication of application: 24.11.2010
(60) Divisional application: 11003026.9
(73) Proprietor: Ajinomoto Co., Inc., Tokyo, 104-8315 (JP)
(72) Inventor: MARUYAMA, Akiko, Kawasaki-shi Kanagawa 210-8681 (JP); SATO, Hiroaki, Kawasaki-shi Kanagawa 210-8681 (JP); KODERA, Tomohiro, Kawasaki-shi Kanagawa 210-8681 (JP)
(74) Representative: Strehl Schübel-Hopf & Partner
(86) International application number: PCT/JP2009/055571
(87) International publication number: WO 2009/116662

(56) References cited:
- EP-A1- 0 492 406
- EP-A1- 2 179 662
- WO-A1-2008/001940
- WO-A1-2008/156126
- JP-A- 3 219 854
- JP-A- 2000 060 431
- US-A- 4 917 904
- NISHIMURA K. ET AL.: 'Effects of ascorbic acid on the formation process for a heat-induced gel of fish meat (kamaboko).' BIOSCIENCE, BIOTECHNOLOGY, AND BIOCHEMISTRY vol. 56, no. 11, 1992, pages 1737 - 1743
- 'Program and Abstracts 5th World Fisheries Congress', 2008 article DUANGMAL K. ET AL.: 'Effect of food grade additives on red tilapia surimi gel quality.', page 218
- HOHENHEIM S. G. ET AL.: 'Neue Moeglichkeiten zur Beeinflussung der Teigeigenschaften bei Roggen und Triticale.' GETREIDE MEHL BROT vol. 54, no. 3, 2000, pages 160 - 164

## Description

### Technical Field

The present invention relates to a method for producing a fish paste product using a transglutaminase, ascorbic acid or a related compound thereof and an α-glucosidase. It also relates to an enzyme preparation for a fish paste product.

### Background Art

Fish paste products, such as boiled fish paste cakes, have been widely eaten as traditional food products in Japan. Recently, with growing concerns about health, the popularity of fish paste products has been increasing even in foreign countries including European nations and the U.S. Together with the influence of the increase in the oil price, the price of *surimi,* which is a material for making a fish paste product, has been rising. For this reason, various attempts have been made to reduce the material cost. For example, one approach is to reduce the amount of *surimi*, making up for it by increasing the amount of water. In this approach, in order to reinforce the firmness and elasticity, starch, vegetable protein, albumen, alkali salt, and the like are used as auxiliary materials. However, with respect to the setting time for allowing an enzymatic reaction or chemical reaction to occur in kneaded fish paste with other ingridients *nerimi,* an enough setting time cannot be taken in the production of some fish paste products, such as deep-fried fish paste cakes, requiring further reinforcement. In such a product, starch, vegetable protein, and albumen are not so effective, whereas when alkali salt or the like is added thereto in an amount that will be effective, this adversely influences the flavor.

It has been reported that by using enzymes such as a transglutaminase and an ascorbate oxidase in combination with alkali and auxiliary materials serving as the substrate, certain degrees of firmness and elasticity can be imparted (Japanese Patent No. 3702709). However, in the actual production line, there is a problem in that the quality differs between products of the initial flow and those in the final flow. It is believed to be because *surimi* used at the last is held longer after kneaded till shaped and heated, and the enzymatic reaction thus proceeds further, resulting in changes in the physical properties of kneaded fish paste other ingridients *nerimi*. Further, when the amount of enzyme added is so small that it only results in an acceptable change in the physical properties of kneaded fish paste other ingridients *nerimi* during the production, the effects in imparting firmness and elasticity are insufficient. In particular, in the case of a deep-fried fish paste cake, because of the short time of transglutaminase reaction, the amount of transglutaminase has to be increased. As a result, the physical properties change during the process of standing (while the kneaded fish paste other ingridients *nerimi* is allowed to stand until the shaping/heating process during the production process).

Meanwhile, SurimiTechnology, p. 291, published by Marcel Dekker Inc., describes that the addition of ascorbic acid to *surimi* increases the gel strength, and that the optimal amount of ascorbic acid added is 0.2% relative to *surimi.* However, as a result of investigation, the present inventors have confirmed that a product having 0.2% ascorbic acid has a texture with insufficient elasticity. It has also been reported that when natural calcium and sodium ascorbate are used to produce a tube-shaped fish paste cake, this results in improvised firmness and elasticity (JP-A-1-273566). Although this method solves the problems caused during the production process to some extent, it is still insufficient in terms of effectiveness in imparting elasticity, and results in a rubber-like, strange texture. This method is thus not suitable for the application to fish paste products.

For meat products, a technique using a transglutaminase, ascorbic acid, and polymerized phosphoric acid has been reported (Japanese Patent No. 3049966). However, regarding the use of ascorbic acid for fish paste products, no optimal amount is defined, and the effects achieved by the combined use remain unclear. Further, as described in the Examples, the proportion of transglutaminase relative to the amount of ascorbic acid is 0.000025 to 0.00005 g per unit of transglutaminase; this greatly differs from the range of the invention. Therefore, none of the above techniques achieves the provision of a fish paste product with a sufficient level of desired firmness and elasticity while maintaining the production suitability. There thus is a demand for further improvement.

### Disclosure of the Invention

An object of the invention is to provide a method for producing a fish paste product, capable of suppressing changes in the physical properties of kneaded fish paste other ingridients nerimi during the production process of a fish paste product and also of, even when a reduced amount of material *surimi* is used, providing a fish paste product with firmness and elasticity. The invention also provides an enzyme preparation for producing a fish paste product.

As a result of extensive research, the present inventors found a method capable of suppressing variations in product quality due to the difference in the production time and also of, even in a system using a reduced amount of *surimi,* providing a fish paste product with firmness and elasticity. The method includes suitably combining a transglutaminase with ascorbic acid or a related compound thereof, together with an α-glucosidase. The invention was thus accomplished.

That is, the invention comprises the followings.
[1] A method for producing a fish paste product, wherein ascorbic acid, sodium ascorbate, ascorbic acid 2-glucoside, ascorbyl palmitate or ascorbyl stearate, a transglutaminase and an α-glucosidase are added.
[2] A method according to [1], wherein the amount of the ascorbic acid or a related compound thereof is 0.2 to 1.2 g per 1 kg of the material *surimi,* and the amount of the transglutaminase is 40 to 200 units per 1 kg of the material *surimi*.
[3] A method according to [2], wherein the amount of the α-glucosidase is 1000 to 12000 units per 1 kg of the material *surimi*.
[4] A method according to any one of [1] to [3], wherein the fish paste product is selected from the group consisting of a deep-fried fish paste cake, imitation crab, a tube-shaped fish paste cake, and a fish sausage.
[5] An enzyme preparation for producing a fish paste product, containing ascorbic acid sodium ascorbate, ascorbic acid 2-glucoside, ascorbyl palmitate or ascorbyl stearate and a transglutaminase as active ingredients, wherein the amount of the ascorbic acid sodium ascorbate, ascorbic acid 2-glucoside, ascorbyl palmitate or ascorbyl stearate in the enzyme preparation is 0.002 to 0.03 g per 1 unit of the transglutaminase in the enzyme preparation, wherein the enzyme preparation further contains as an active ingredient an α-glucosidase, wherein the amount of the α-glucosidase is 10 to 200 U per 1 unit of the transglutaminase.

As transglutaminases, those derived from mammals (see JP-B-1-50382), those derived from fishes (see Japanese Society of Fisheries Science, Heisei 3 (1991) Autumnal Conference, Proceedings, p. 180), those derived from plants, those derived from microorganisms (see JP-A-1-27471, JP-A-11-75876), those produced by gene recombination (see JP-A-1-300899), and so forth are known. The transglutaminase (hereinafter sometimes referred to as TG) used in the invention may be one derived from any source. An example thereof is a transglutaminase derived from microorganisms, which is commercially available from AJINOMOTO Co., Inc under the trade name "Activa" TG.

The ascorbic acid or a related compound thereof used in the invention is ascorbic acid, sodium ascorbate, ascorbic acid 2-glucoside, ascorbyl palmitate, or ascorbyl stearate. Any of these may be used as long as it is food grade. Sodium ascorbate is the most preferable in terms of taste, etc.

The α-glucosidase (hereinafter sometimes referred to as AG) used in the invention is an enzyme that hydrolyzes non-reducing terminal α-1,4-glucosidic linkages to produce α-glucose, and preferably has saccharide transfer activity to convert an α-1,4-linkage to an α-1,6 linkage. Such an α-glucosidase is called transglucosidase. That is, transglucosidase is an α-glucosidase enzyme with saccharide transfer activity. Glucoamylases react in a similar way to α-glucosidases; however, the resulting glucose is not α-glucose but β-glucose. Further, it is particularly important for an enzyme used in the invention to have not only hydrolysis activity but also saccharide transfer activity so that in the presence of a hydroxy-containing suitable acceptor, the enzyme converts an α-1,4-linkage in glucose to an α-1,6 linkage to produce a branched saccharide. An example of the α-glucosidase used in the invention is an enzyme commercially available from AMANO ENZYME INC under the trade name Transglucosidase L "Amano".

Examples of fish paste products herein include boiled fish paste cakes, deep-fried fish paste cakes, tube-shaped fish paste cakes, imitation crab, fish sausages, *naruto*, and *hampen*, as well as processed foods produced from seafood kneaded fish paste other ingridients *nerimi* (a kneaded paste of seafood) such as Chinese steamed dumplings. Among these, the invention is particularly useful for products produced in a process with no setting time. The setting time herein means the time for intentional gelatinization of paste-like *kneaded* fish paste other ingridients *nerimi.* When no setting time is taken, an enzymatic reaction has a large impact on the product during the transfer and accumulation of kneaded fish paste other ingridients nerimi in the production line. This results in a problem in that even within the same lot, there are differences in physical properties and quality between products of the initial flow (products completed at the beginning) and those of a final flow (products completed near the end).

Typical example of fish paste products produced taking no such setting time are deep-fried fish paste cakes, imitation crab, fish sausages, tube-shaped fish paste cakes, *naruto*, etc. Further, *hampen*, *datemaki* fish-paste omelet, and fish balls from fish meat are also included.

The material *surimi* herein means a ground paste of seafood, which is used as a material for making a fish paste product. Examples of fishes ordinarily used for the material *surimi* include Alaska pollack, Golden threadfin bream, Atka mackerel, lizard fish, shark, and sardine, but any kind of seafood is usable.

In the method for producing a fish paste product according to the invention, how to add ascorbic acid or a related compound thereof, TG, and AG is not limited as long as they are added to the material *surimi* prior to a heating process such as deep frying, steaming, or the like, and the order of addition is not limited either. For example, it is possible that an enzyme preparation containing ascorbic acid or a related compound thereof and TG or an enzyme preparation containing ascorbic acid or a related compound thereof, TG, and AG is prepared, and such an enzyme preparation is then added to the material *surimi* together with or separately from salt, seasonings, and other materials. Alternatively, it is also possible that without preparing an enzyme preparation, ascorbic acid or a related compound thereof, TG, and AG are separately added to the material *surimi* together with or separately from salt, seasonings, and other materials.

In the method for producing a fish paste product according to the invention, the proper amount of TG to be added is 40 units to 200 units per 1 kg of material *surimi.* When the amount is less than 40 units, the addition is not sufficiently effective, while when the amount is more than 200 units, this results in variations in quality during the production process. The TG activity unit is measured and defined using a hydroxamate method as follows. That is, in a tris buffer having a pH of 6.0 at 37°C, TG is allowed to act in a reaction system having as the substrate benzyloxycarbonyl-L-glutamylglycine and hydroxylamine. In the presence of trichloroacetic acid, the resulting hydroxamic acid is converted to an iron complex. Next, the absorbance at 525 nm is measured to calculate the amount of hydroxamic acid from the calibration curve. The amount of enzyme that produced 1 µmol of hydroxamic acid in 1 minute is defined as a TGase activity unit, i.e., one unit (1 U) (see JP-A-64-27471).

In the method for producing a fish paste product according to the invention, the amount of ascorbic acid or a related compound thereof is 0.2 g to 1.2 g, preferably 0.4 g to 0.8 g, per kg of material *surimi.* When the amount of ascorbic acid or a related compound thereof is less than 0.2 g, such an amount is not effective, while an amount of more than 1.2 g results in a lack of elasticity of the texture. According to Surimi Technology, p. 291, published by Marcel Dekker, Inc., which has reported effects of ascorbic acid on *surimi,* the amount of ascorbic acid is 0.002 g to 0.03 g, preferably 0.002 g to 0.004 g, per unit of TG. When the amount is less than 0.1 g, desired firmness is not obtained, while when the amount is more than 3 g, elasticity imparted by TG is not perceived, resulting in a hard, fragile, rubber-like texture.

In the method for producing a fish paste product according to the invention, the addition of an α-glucosidase provides the fish paste product with a smooth texture, thereby providing an even higher-quality fish paste product. Further, gelatinization of starch is accelerated, and, therefore, a larger amount of starch material can be used. In such a case, the amount of AG is preferably 500 to 50000 units, more preferably 1000 to 12000 units, per 1 kg of *surimi.* When the amount is less than 1000 units, the addition is not sufficiently effective, while when the amount is more than 12000 units, this results in strange stickiness. The AG activity unit was determined as follows. Specifically, 1 ml of 0.02 M acetic acid buffer (pH 5.0) was added to 1 ml of 1 mM α-methyl-D-glucoside, and 0.5 ml of the enzyme solution was added thereto. The mixture was allowed to act at 40°C for 60 minutes, and the amount of enzyme that produced 1 µg of glucose in 2.5 ml of reaction mixtures was defined as 1 U (unit).

To TG and ascorbic acid or a related compound thereof are added, for example, AG, bulking agents like dextrin, starch, and the like, alkali materials like phosphates and the like, saccharides like glucose and the like, oxidoreductase like ascorbate oxidase and the like, a protein hydrolysate, a protein partial hydrolysate, an emulsifier, reducing agents like glutathione, cysteine, and the like, and other food additives. This provides an enzyme preparation for fish paste products in whose production the enzymatic reaction time is short.

The enzyme preparation according to the invention may be in the form of a liquid, a paste, granules, or a powder.

The proportions of the ascorbic acid or a related compound thereof, TG, and AG in the enzyme preparation according to the invention are each more than 0% and less than 100%. It is preferable that the amount of TG is 1 to 200 units, the amount of ascorbic acid or a related compound thereof is 0.1 to 0.7 g of, and the amount of AG is 100 to 10000 units of per 1 gram of a preparation. The amount of ascorbic acid or a related compound thereof is 0.002 to 0.03 g per 1 unit of TG. The amount of AG is 10 to 200 U, preferably 14 to 130 U, per 1 unit of TG.

### Best Mode for Carrying Out the Invention

Hereinafter, the present invention will be explained in detail with reference to examples.

### Example 1

Using the enzyme preparations shown in Table 1, deep-fried fish paste cakes of the formulation shown in Table 2 were prepared by the below-described method. As control, a deep-fried fish paste cake (control sample 1) was prepared using the formulation shown in Table 3 (non-cost-saving formulation), in which the amount of *surimi* is 5% larger than in the formulation shown in Table 2 (cost-saving formulation). Further, as control, another deep-fried fish paste cake was prepared (control sample 2) according to the same formulation as in Table 2, except for using no enzyme preparation.

**Table 1: Formulation of Enzyme Preparation**

| Materials (weight %) | TG 0% | TG 2% | TG 4% | TG 7% | TG 10% | TG 13% |
|---|---|---|---|---|---|---|
| Transglutaminase "Activa" TG (manufactured by AJINOMOTO, 1000U/g) | 0 | 2 | 4 | 7 | 10 | 13 |
| α-Glucosidase "Transglucosidase L" (manufactured by AMANO ENZYME, 550000 U/g) | 0.5 | 0.5 | 0.5 | 0.5 | 0.5 | 0.5 |
| Sodium ascorbate (manufactured by WELCOM) | 25 | 25 | 25 | 25 | 25 | 25 |
| Dextrin | 74.5 | 72.0 | 70.5 | 67.5 | 64.5 | 61.5 |
| TG activity/enzyme preparation 1 g (U/g) | 0 | 20 | 39 | 70 | 100 | 123 |
| AG activity/enzyme preparation 1g (U/g) | 2549 | 2549 | 2549 | 2549 | 2549 | 2549 |

**Table 2: Formulation of Deep-Fried Fish Paste Cake (Cost-Saving Formulation)**

| Materials | Proportion | to *Surimi* | Amount (g) |
|---|---|---|---|
| Alaska pollack (2nd grade) | 52.0% | 100% | 3120 |
| Potato starch | 8.0% | 15% | 480 |
| Salt | 1.1% | 2% | 66 |
| Sugar | 1.7% | 3% | 102 |
| "Ajinomoto" (MSG) | 0.3% | 1% | 18 |
| Enzyme preparation | 0.1 % | 0.2% | 6.24 |
| Ice water | 36.9% | 71% | 2214 |
| Total | 100% | 192% | 6000 |

**Table 3: Formulation of Deep-Fried Fish Paste Cake (Non-Cost-Saving Formulation)**

| Materials | Proportion | to *Surimi* | Amount (g) |
|---|---|---|---|
| Alaska pollack (2nd grade) | 57.0% | 100% | 3420 |
| Potato starch | 8.0% | 14% | 480 |
| Salt | 1.1% | 2% | 66 |
| Sugar | 1.7% | 3% | 102 |
| "Ajinomoto" (MSG) | 0.3% | 1% | 18 |
| Ice water | 31.9% | 56% | 1914 |
| Total | 100.0% | 175% | 6000 |

First, 3120 g or 3420 g of crushed, frozen *surimi* of 2nd grade Alaska pollack was left to thaw at room temperature for 30 minutes. The partially thawed *surimi* was finely cut with a Stephan cutter (manufactured by STEPHAN, STEPHAN UM12). The cut *surimi* was stirred at low speed for 1 minute, and then at high speed for 2 minutes. To the resulting powder-like *surimi* were added salt and half the amount of ice water, and the mixture was stirred at low speed for 30 seconds. When the mixture started getting uniform as a whole, the speed was changed, and high-speed stirring was continued for 3 minutes. Subsequently, "Ajinomoto" (MSG), sugar, potato starch, and remaining ice water were added to the stirred *surimi,* and the mixture was stirred at low speed for 30 seconds. When the mixture started getting uniform as a whole, the speed was changed, and high-speed stirring was performed. The high-speed stirring was stopped when the temperature of the *surimi* reached about 15 °C. The *surimi* in this state is called kneaded fish paste other ingridients nerimi. The obtained kneaded fish paste other ingridients nerimi was divided into 500-g portions, and mixing was performed with a spatula for 1 minute. In the case of adding a preparation, each preparation was added to the kneaded fish paste other ingridients *nerimi* of the examined recipe in a proportion of 0.2% (0. 6 g) relative to the *surimi*, and then mixed with a spatula for 1 minute. The preparation shown in Table 3 was produced and used to study the effects of the transglutaminase. The amount of sodium ascorbate in the preparation was fixed at 25%.

Further, a portion of the kneaded fish paste other ingridients *nerimi* was cut into an elliptical shape, and was deep fried in soybean refined oil at 140°C for 2 minutes and at 170°C for 2 minutes. About 80 g of the remaining *kneaded* fish paste other ingridients *nerimi* was filled into a plast cup. Immediately after filling and 90 minutes after filling (15°C), the breaking strength was measured using a 25mm spherical plunger. In order to determine the physical properties of the deep-fried fish paste cake, the breaking strength was measured using a 5mm spherical plunger and a texture analyzer (manufactured by EKO INSTRUMENTS, TA-XT2i). The difference in breaking strength between the kneaded fish paste other ingridients *nerimi* in 0 minute and that in 90 minutes was used as an index for changes in the physical properties of the kneaded fish paste other ingridients *nerimi* during the production process. A greater difference was taken as indication of a greater change in physical properties. When the change in physical properties has no significant difference from the control sample 1, such a change was considered acceptable (n = 3).

The deep-fried fish paste cakes were subjected to sensory evaluation. With respect to firmness and elasticity, the deep-fried fish paste cakes were rated from -2 to +2 in increments of 0.5, taking the standard recipe group as 0 (n = 5). Firmness indicates the hardness perceived at the beginning of chewing, and elasticity indicates the stress perceived as one continues chewing. Regarding the scores in evaluations other than the overall evaluation, 0.5 indicates perception of slight difference from the control sample 1, 1 indicates perception of difference, 1.5 indicates perception of large difference, and 2 indicates perception of extremely large difference. In the overall evaluation, with respect to the desired texture and functions, one with optimal properties was evaluated as ○○, one with sufficient properties was evaluated as ○, one with not sufficient but acceptable properties was evaluated as Δ, and one failing to achieve the desired properties was evaluated as ×.

The results of the physical property measurement and the sensory evaluation are shown in Table 4. As shown in Table 4, the physical properties of kneaded fish paste other ingridients *nerimi* in the case of TG 4% were nearly equal to the results from the control sample 1. In the cases of TG 7% and TG 10%, the values thereof were not significantly different from the results from the control sample 1, but were larger than in the case of the control sample 1. Significant differences were confirmed between the values in the cases of TG 13% and TG 20% and the results from the control sample 1. ASNa in Table 4 represents sodium ascorbate.

**Table 4: Results of Physical Property Measurement and Sensory Evaluation for Deep-Fried Fish Paste Cakes**

| Test Samples | Amount per kg of *Surimi* | | | Difference in *Nerimi* Physical Property Changes from Control Sample 1(%) | Breaking Strength of Deep-Fried Fish Paste Cake relative to Control Sample 1 (%) | Sensory Evaluation | | Significant Difference in *Nerimi* Physical Property Changes | Overall Evaluation |
|---|---|---|---|---|---|---|---|---|---|
| | TG (U) | ASNa (g) | AG (u) | | | Firmness | Elasticity | | |
| Control Sample 1 | 0 | 0 | 0 | 100 | 100 | 0 | 0 | - | ○ |
| Control Sample 2 | 0 | 0 | 0 | 69 | 77 | - 2 | -1.5 | Present | x |
| TG 0% | 0 | 0.5 | 5098 | 67 | 94 | - 0.5 | - 0.5 | Absent | x |
| TG 2% | 40 | 0.5 | 5098 | - | 99 | 0 | 0 | Absent | ○ |
| TG 4% | 78 | 0.5 | 5098 | 97 | 101 | 0 | 0.5 | Absent | ○○ |
| TG 7% | 140 | 0.5 | 5098 | 122 | 102 | 0 | 0.5 | Absent | ○○ |
| TG 10% | 200 | 0.5 | 5098 | 139 | 101 | 0.5 | 0.5 | Absent | ○ |
| TG 13% | 245 | 0.5 | 5098 | 171 | 100 | 1 | -0.5 | Present | x |
| TG 20% | 395 | 0.5 | 5098 | 222 | 97 | 1.5 | -1 | Present | x |

Meanwhile, in the cases of TG 2.5%, TG 4%, TG 7%, and TG10%, the results show that they were as effective as or more effective than the control sample 1 in terms of firmness, elasticity, dry texture, and breaking strength. In the cases of TG 13% and TG 20%, although their breaking strength was equal to or higher than that of the control sample 1, the results of sensory evaluation show that their elasticity was inferior to that of the control sample 1. This confirms that the addition of 0.5 g of sodium ascorbate, 5098 U of AG, and 40 to 200 U of TG per 1 kg of material *surimi* results in improved firmness and elasticity while maintaining the production suitability. This also confirms that in spite of the reduction in *surimi* proportion from 57% to 52%, a deep-fried fish paste cake with firmness and elasticity comparable to the case of not reducing the *surimi* proportion can be produced.

### Example 2

Using the enzyme preparations shown in Table 5, deep-fried fish paste cakes were prepared in the same manner as in Example 1, and were subjected to the physical property measurement and the sensory evaluation in the same manner as in Example 1. That is, the formulation for each deep-fried fish paste cake is the same as in Table 2, and the materials as well as control samples are the same as in Example 1. The amount of TG was 4.75% (86 U per kg of material *surimi)* so as to fall within the optimal amount range shown in the Example 1.

**Table 5: Formulation of Enzyme Preparation**

| Materials weight %) | ASNA 0% | ASNa 10% | ASNa 20% | ASNa 30% | ASNa 40% | ASNa 60% | ASNa 80% | ASNa 100% |
|---|---|---|---|---|---|---|---|---|
| Transglutaminase | 4.75 | 4.75 | 4.75 | 4.75 | 4.75 | 4.75 | 4.75 | 0 |
| α-Glucosidase | 0.5 | 0.5 | 0.5 | 0.5 | 0.5 | 0.5 | 0.5 | 0 |
| Sodium ascorbate | 0 | 10 | 20 | 30 | 40 | 60 | 80 | 100 |
| Dextrin | 94.75 | 84.75 | 74.75 | 64.75 | 54.75 | 34.75 | 14.75 | 0 |

The results of the physical property measurement and the sensory evaluation are shown in Table 6. As shown in Table 6, regarding sodium ascorbate, in all the test samples, the changes in the physical properties of kneaded fish paste other ingridients *nerimi* were smaller than in the case of the control sample 1. In the cases of ASNa 20%, ASNa 30%, ASNa 40%, and ASNa60%, the results of the sensory evaluation and the physical property evaluation confirm that they were as effective as or more effective than the control sample 1. In the case of ASNa 10% (0.2 g per 1 kg of material *surimi*), although the results of the sensory evaluation thereof and their breaking strength were both inferior to those of the control sample 1, some improving effects were observed. However, in the cases of ASNa 80% and ASNa 100%, the products lacked elasticity. They provided a rubber-like, strange texture, showing small improving effects. ASNa in Table 6 represents sodium ascorbate.

**Table 6: Results of Physical Property Measurement and Sensory Evaluation for Deep-Fried Fish Paste Cakes**

| Test Samples | Amount per kg of *Surimi* | | | Difference in *Nerimi* Physical Property Changes from Control Sample 1(%) | Breaking Strength of Deep-Fried Fish Paste Cake relative to Control Sample 1 (%) | Sensory Evaluation | | Note | Overall Evaluation |
|---|---|---|---|---|---|---|---|---|---|
| | TG (U) | ASNa (g) | AG (u) | | | Firmness | Elasticity | | |
| Control Sample 1 | 0 | 0 | 0 | 100 | 100 | 0 | 0 | | ○ |
| Control Sample 2 | 0 | 0 | 0 | 68 | 77 | -1.5 | - 2 | | x |
| ASNa 0% | 86 | 0 | 5098 | 98 | 90 | -1 | -1 | | x |
| ASNa10% | 86 | 0.2 | 5098 | - | 93 | -0.5 | -0.5 | | Δ |
| ASNa 20% | 86 | 0.4 | 5098 | 96 | 99 | 0 | 0.5 | | ○○ |
| ASNa 30% | 86 | 0.6 | 5098 | - | 99 | 0.5 | 0.5 | | ○○ |
| ASNa 40% | 86 | 0.8 | 5098 | 84 | 103 | 0.5 | 0 | | ○ |
| ASNa 60% | 86 | 1.2 | 5098 | - | 109 | 1 | - 0.5 | | Δ |
| ASNa 80% | 86 | 1.6 | 5098 | - | 108 | 1.5 | - 0.5 | Rubber-like texture | x |
| ASNa 100% | 0 | 2.0 | 0 | 91 | 105 | 1.0 | -1 | Rubber-like texture | x |

This confirms that the addition of 86 U of transglutaminase and 0.2 g to 1.2 g of sodium ascorbate per 1 kg of material *surimi* results in a deep-fried fish paste cake with improved firmness and elasticity, and also that in spite of the reduction in *surimi* proportion from 57% to 52%, a deep-fried fish paste cake with firmness and elasticity comparable to the case of not reducing the *surimi* proportion can be produced.

### Example 3

Using the enzyme preparations shown in Table 7, deep-fried fish paste cakes were prepared in the same manner as in Example 1, and were subjected to the physical property measurement (except for the measurement of changes in the physical properties of kneaded fish paste other ingridients *nerimi*) and the sensory evaluation in the same manner as in Example 1. That is, the formulation for each deep-fried fish paste cake is the same as in Table 2, and the materials as well as control samples are the same as in Example 1. The amount of TG was 4.0% (86 U per kg of material *surimi)* so as to fall within the optimal amount range shown in the Example 1, and the amount of sodium ascorbate was 30% (0.6 g per kg of material *surimi)* so as to fall within the optimal amount range shown in the Example 2.

**Table 7: Formulation of Enzyme Preparation**

| Materials (weight %) | AG 0.2% | AG 0.5% | AG 0.75% | AG 1% |
|---|---|---|---|---|
| Transglutaminase | 4.75% | 4.75% | 4.75% | 4.75% |
| α-Glucosidase | 0.20% | 0.50% | 0.75% | 1.00% |
| Sodium ascorbate | 30.00% | 30.00% | 30.00% | 30.00% |
| Dextrin | 65.05% | 64.75% | 64.5% | 64.25% |
| TG activity/enzyme preparation 1 g (U/g) | 43 | 43 | 43 | 43 |
| AG activity/enzyme preparation 1 g (U/g) | 900 | 2549 | 4294 | 5506 |

The results of the physical property measurement and the sensory evaluation are shown in Table 8. As the results of the sensory evaluation shows in Table 8, in the cases of AG 0.2%, AG 0.5%, AG 0.75%, and AG 1%, the dry texture due to starch was ameliorated as compared with the control sample 2, resulting in a texture almost equal to the texture of the control sample 1. However, in the case of AG 1% (11012 U per 1 kg of material *surimi),* although some improving effects were confirmed, odd stickiness was slightly perceived.

This confirms that by adding 86 U of transglutaminase, 0. 6 g of sodium ascorbate, and 1800 to 11012 U of α-glucosidase per 1 kg of material *surimi,* a deep-fried fish paste cake can be provided with improved firmness and elasticity, and a deterioration in texture (dryness) due to starch can be suppressed.

**Table 8: Results of Physical Property Measurement and Sensory Evaluation for Deep-Fried Fish Paste Cakes**

| | Amount added to *Surimi* | | | Breaking Strength of Deep-Fried Fish Paste Cake relative to Control Sample 1 (%) | Sensory Evaluation Sensory Evaluation | | | Note | Overall Evaluation |
|---|---|---|---|---|---|---|---|---|---|
| | TG (U) | ASNa (g) | AG (U) | | Firmness | Elasticity | Dryness | | |
| Control Sample 1 | 0 | 0 | 0 | 100 | 0 | 0 | 0 | | ○ |
| Control Sample 2 | 0 | 0 | 0 | 77 | - 2 | - 2 | - 0.5 | | x |
| AG 0% | 86 | 0.6 | 0 | 103 | 0 | 0 | - 0.5 | | Δ |
| AG 0.2% | 86 | 0.6 | 1800 | 105 | 0 | 0 | 0 | | ○ |
| AG 0.5% | 86 | 0.6 | 5198 | 98 | - 0.25 | 0 | 0 | | ○○ |
| AG 0.75% | 86 | 0.6 | 8588 | 104 | 0 | 0 | 0 | | ○○ |
| AG 1% | 86 | 0.6 | 11012 | 102 | 0 | 0 | 0 | Slightly sticky | ○ |

### Industrial Applicability

According to the invention, even in the case of a deep-fried fish paste cake and like fish paste products in whose production the time for enzymatic reaction (setting time) is short, changes in the physical properties of kneaded fish paste other ingridients *nerimi* during the production process can be suppressed, while achieving firmness and elasticity and suppressing a deterioration in texture (dryness) due to starch. Therefore, the amount of material *surimi* can be reduced. This thus is extremely useful in the food field.

## Claims

1. A method for producing a fish paste product, wherein ascorbic acid, sodium ascorbate, ascorbic acid 2-glucoside, ascorbyl palmitate or ascorbyl stearate, a transglutaminase and an α-glucosidase are added.

2. A method according to Claim 1, wherein the amount of the ascorbic acid or a related compound thereof is 0.2 to 1.2 g per 1 kg of the material *surimi,* and the amount of the transglutaminase is 40 to 200 units per 1 kg of the material *surimi.*

3. A method according to Claim 2, wherein the amount of the α-glucosidase is 1000 to 12000 units per 1 kg of the material *surimi*.

4. A method according to any one of Claim 1 to 3, wherein the fish paste product is selected from the group consisting of a deep-fried fish paste cake, imitation crab, a tube-shaped fish paste cake, and a fish sausage.

5. An enzyme preparation for producing a fish paste product, containing ascorbic acid, sodium ascorbate, ascorbic acid 2-glucoside, ascorbyl palmitate or ascorbyl stearate and a transglutaminase as active ingredients, wherein the amount of the ascorbic acid, sodium ascorbate, ascorbic acid 2-glucoside, ascorbyl palmitate or ascorbyl stearate in the enzyme preparation is 0.002 to 0.03 g per 1 unit of the transglutaminase in the enzyme preparation, wherein the enzyme preparation further contains as an active ingredient an α-glucosidase, wherein the amount of the α-glucosidase is 10 to 200 U per 1 unit of the transglutaminase.

## Patentansprüche

1. Verfahren zum Herstellen eines Fischpastenprodukts, wobei Ascorbinsäure, Natriumascorbat, Ascorbinsäure-2-glucosid, Ascorbylpalmitat oder Ascorbylstearat, eine Transglutaminase und eine α-Glucosidase zugegeben werden.

2. Verfahren nach Anspruch 1, wobei die Menge der Ascorbinsäure oder einer verwandten Verbindung davon 0,2 bis 1,2 g pro 1 kg eines Surimi-Materials ist und die Menge der Transglutaminase 40 bis 200 Einheiten pro 1 kg des Surimi-Materials ist.

3. Verfahren nach Anspruch 2, wobei die Menge der α-Glucosidase 1000 bis 12000 Einheiten pro 1 kg des Surimi-Materials ist.

4. Verfahren nach einem der Ansprüche 1 bis 3, wobei das Fischpastenprodukt aus der Gruppe ausgewählt ist, die aus einem tiefgefrorenen Fischpastenkuchen, Krabbenimitat, einem tubenförmigen Fischpastenkuchen und einer Fischwurst besteht.

5. Enzymzubereitung zum Herstellung eines Fischpastenprodukts, die Ascorbinsäure, Natriumascorbat, Ascorbinsäure-2-glucosid, Ascorbylpalmitat oder Ascorbylstearat und eine Transglutaminase als aktive Bestandteile enthält, wobei die Menge der Ascorbinsäure, des Natriumascorbats, des Ascorbinsäure-2-glucosids, des Ascorbylpalmitats oder des Ascorbylstearats in der Enzymzubereitung 0,002 bis 0,03 g pro 1 Einheit der Transglutaminase in der Enzymzubereitung ist, wobei die Enzymzubereitung außerdem als aktiven Bestandteil eine α-Glucosidase enthält, wobei die Menge der α-Glucosidase 10 bis 200 U pro 1 Einheit der Transglutaminase ist.

## Revendications

1. Procédé de production d'un produit de pâte de poisson, dans lequel on ajoute de l'acide ascorbique, de l'ascorbate de sodium, du 2-glucoside d'acide ascorbique, du palmitate d'ascorbyle ou du stéarate d'ascorbyle, une transglutaminase et une α-glucosidase.

2. Procédé selon la revendication 1, dans lequel la quantité de l'acide ascorbique ou d'un composé apparenté de celui-ci est de 0,2 à 1,2 g pour 1 kg du matériau *surimi,* et la quantité de la transglutaminase est de 40 à 200 unités pour 1 kg du matériau *surimi.*

3. Procédé selon la revendication 2, dans lequel la quantité de l'α-glucosidase est de 1 000 à 12 000 unités pour 1 kg du matériau *surimi.*

4. Procédé selon l'une quelconque des revendications 1 à 3, dans lequel le produit de pâte de poisson est choisi dans le groupe constitué d'un cake de pâte de poisson cuit dans la friture, d'une imitation de crabe, d'un cake de pâte de poisson façonné en tube, et d'une saucisse de poisson.

5. Préparation d'enzyme pour la production d'un produit de pâte de poisson contenant de l'acide ascorbique, de l'ascorbate de sodium du 2-glucoside d'acide ascorbique, du palmitate d'ascorbyle ou du stéarate d'ascorbyle et une transglutaminase comme ingrédients actifs, dans laquelle la quantité de l'acide ascorbique, de l'ascorbate de sodium, du 2-glucoside d'acide ascorbique, du palmitate d'ascorbyle ou du stéarate d'ascorbyle dans la préparation d'enzyme est de 0,002 à 0,03 g pour 1 unité de la transglutaminase dans la préparation d'enzyme, dans laquelle la préparation d'enzyme contient de plus comme ingrédient actif une α-glucosidase, dans laquelle la quantité de l'α-glucosidase est de 10 à 200 U pour 1 unité de la transglutaminase.
